# EUROPÄISCHE PATENTSCHRIFT

(11) **EP 2 715 334 B1**
(45) Veröffentlichungstag und Bekanntmachung des Hinweises auf die Patenterteilung: **08.04.2020**
(21) Anmeldenummer: 12726766.4
(22) Anmeldetag: 24.05.2012
(51) Int. Cl.: G01N 27/90, G01B 7/06

(54) **MESSSONDE ZUR MESSUNG DER DICKE DÜNNER SCHICHTEN**
MEASURING PROBE FOR MEASURING THE THICKNESS OF THIN LAYERS
SONDE DE MESURE PERMETTANT DE MESURER L'ÉPAISSEUR DE COUCHES MINCES

(30) Priorität: 25.05.2011 DE 102011103122; 25.05.2011 DE 102011103123
(43) Veröffentlichungstag der Anmeldung: 09.04.2014
(73) Patentinhaber: Helmut Fischer GmbH Institut für Elektronik und Messtechnik., 71069 Sindelfingen (DE)
(72) Erfinder: FISCHER, Helmut, CH-6315 Oberägeri (CH)
(74) Vertreter: Mammel und Maser
(86) Internationale Anmeldenummer: PCT/EP2012/059690
(87) Internationale Veröffentlichungsnummer: WO 2012/160131

(56) Entgegenhaltungen:
- WO-A2-2010/044670
- US-A- 3 855 561
- US-A- 4 618 825
- US-A- 5 886 522

## Beschreibung

### Messsonde zur Messung der Dicke dünner Schichten

Die Erfindung betrifft eine Messsonde zur Messung der Dicke dünner Schichten gemäß dem Oberbegriff des Anspruchs 1.

Aus der DE 10 2005 054 593 A1 ist eine Messsonde für die Messung der Dicke dünner Schichten bekannt. Diese Messung umfasst ein Gehäuse, in dem zumindest ein Sensorelement vorgesehen ist, welches im Kern einer Längsachse des Gehäuses zumindest geringfügig bewegbar im Gehäuse aufgenommen ist. Das Sensorelement umfasst zumindest eine Spulenvorrichtung, die von einem Topfkern aufgenommen ist. Der Topfkern umfasst einen Mittelzapfen, an dessen stirnseitig zum Gehäuse weisenden Ende eine Aufsetzkalotte vorgesehen ist. Der Topfkern mit dem daran angeordneten Sensorelement und der Aufsetzkalotte wird von einem federnd nachgiebigen Halteelement aufgenommen, welches an einem stirnseitigen Ende des Gehäuses befestigt ist. Eine solche Messsonde kann zur Messung der Schichtdicke nach dem magnetinduktiven Verfahren ausgebildet sein, bei der die Dicke von Nicht-Eisenmetall-Schichten auf magnetisierbaren Grundwerkstoffen zerstörungsfrei ermittelt werden können. Hierfür umfasst die erste Spulenvorrichtung eine erste und zweite Spule. Ebenso eignet sich diese Messsonde auch zur Schichtdickenmessung nach dem Wirbelstromverfahren, bei dem die Dicke von nicht elektrisch leitenden Schichten auf Nicht-Eisenmetallen zerstörungsfrei erfassbar ist. Hierfür ist das Sensorelement als Hallsensor ausgebildet.

Aus der US 5,886,552 ist eine Messsonde zur Messung der Dicke dünner Schichten bekannte, welche eine erste Spulenvorrichtung umfasst, die in der Längsachse des Gehäuses einen Kern aufweist, wobei innerhalb des Gehäuses Eisenwindungen zu dem Kern angeordnet sind, welche nach dem magnetinduktiven Verfahren arbeiten. Zur Sondenspitze weisend ist eine weitere Windung um den Kern angeordnet, welche nach dem Wirbelstromprinzip arbeitet. Die Windungen und der Kern sind fest in dem Gehäuse angeordnet. Entlang der Längsachse des Kerns gesehen sind die im Gehäuse liegenden Windungen für das magnetinduktive Messverfahren durch eine Ringscheibe von der stirnseitigen Windung für das Wirbelstromverfahren getrennt, welche von dem Kern durchsetzt und getrennt zum Kern vom Gehäuse aufgenommen ist. Die US 3,855,561 betrifft eine Filterspule mit einem abgleichbaren Ferrit-Schalenkern. Aus der US 4,618,825 geht eine Messsonde hervor, welche nach dem magnetinduktiven Verfahren eine Schichtdickenmessung ermöglicht.

In der DE 699 35 610 T2 ist die Verwendung eines elektrischen Messelementes offenbart, durch welches mittels eines induktiven Wirbelstromverfahrens eine Messung durchgeführt wird. Dieses Messelement umfasst eine Spule, die so geformt ist, dass sie einen spiralförmigen Abschnitt aufweist.

Die Anforderungen an die Messgenauigkeit der Messvorrichtungen steigen stetig an. Dies bedeutet, dass die Messvorrichtungen nicht nur kleiner ausgebildet sein müssen, um geometrische Störgrößen, wie beispielsweise gekrümmte Messoberflächen, zu eliminieren, um einen größeren Einsatzbereich zu erzielen, sondern auch eine geringere Masse aufweisen, so dass diese nahezu, ohne die Messoberfläche zu beeinträchtigen, aufsetzbar sind.

Der Erfindung liegt die Aufgabe zugrunde, eine Messsonde zu schaffen, bei welcher die erhöhten Anforderungen an die Messgenauigkeit erfüllt werden, wobei eine Messsonde bereitzustellen ist, mit der die Messung sowohl nach dem magnetinduktiven Verfahren als auch nach dem Wirbelstromverfahren ermöglicht wird.

Diese Aufgabe wird erfindungsgemäß durch eine Messsonde gemäß Anspruch 1 verwirklicht, bei der ergänzend zu einer ersten Spulenvorrichtung der Aufsetzkalotte zugeordnet eine zweite Spulenvorrichtung zugeordnet ist, welche aus einem scheiben- oder ringförmigen Träger mit zumindest einer archimedischen Spule besteht, wobei zwischen der ersten und zweiten Spulenvorrichtung zumindest teilweise eine Abschirmung, insbesondere aus einem ferritischen Material, vorgesehen ist. Diese Anordnung ermöglicht, dass sowohl das magnetinduktive Messverfahren als auch das Wirbelstrommessverfahren jeweils ohne eine gegenseitige Beeinflussung und Beeinträchtigung durchführbar sind, wobei gleichzeitig die beiden Spulenvorrichtungen räumlich eng zueinander positionierbar sind. Insbesondere durch die Ausgestaltung der zweiten Spulenvorrichtung, welche aus einem scheiben- oder ringförmigen Träger mit zumindest einer archimedischen Spule ausgebildet ist, die die Aufsetzkalotte umgibt, können die Spulenvorrichtungen nahe an eine Messoberfläche des Messgegenstandes herangeführt werden, wodurch die Messempfindlichkeit verbessert und somit die Messgenauigkeit vergrößert wird. Durch diese Ausgestaltung der zumindest einen archimedischen Spule der zweiten Spulenvorrichtung, welche die Messung nach dem Wirbelstromverfahren durchführt, kann das Hochfrequenzfeld quasi direkt an die Messoberfläche herangeführt werden, wodurch die sehr hohe Empfindlichkeit der Messsonde und somit eine hohe Auflösung erzielt werden kann, um auch dünnere Schichten taktil zu erfassen.

Die Aufsetzkalotte der Messsonde, um die Magnetfeldlinien bei der magnetinduktiven Messung besser zur Messoberfläche zu führen, ist bevorzugt aus einem weichmagnetischen Material hergestellt. Gemäß einer ersten Ausführungsform ist die Aufsetzkalotte als Teil eines Mittelzapfens des Topfkerns ausgebildet, welcher die erste Spulenvorrichtung aufnimmt. Alternativ kann die Aufsetzkalotte aus einem weichmagnetischen Material hergestellt und an dem Topfkern befestigbar sein. Diese Ausführungsform kann beispielsweise standardisierte Topfkerne einerseits und an verschiedene Messaufgaben angepasste Aufsetzkalotten andererseits einsetzen.

Die Aufsetzkalotte weist eine verrundete Aufsetzfläche auf, in der eine Polkappe vorgesehen ist, die gemäß einer ersten Ausführungsform aus einer Hartmetallbeschichtung besteht. Dadurch kann eine hohe Verschleißfestigkeit für einen einfachen Aufbau einer solchen Aufsetzkalotte ermöglicht werden. Eine solche Hartmetallbeschichtung kann durch Polieren endbearbeitet werden. Beispielsweise kann die Beschichtung durch eine TiC-Beschichtung ausgebildet werden. Deren Schichtdicken können bei 1 µm bis 10 µm, insbesondere 2 µm, liegen.

Alternativ ist die Polkappe der Aufsetzfläche der Aufsetzkalotte durch einen Hartmetallkern oder Hartmetallstift gebildet, der sich vorteilhafterweise zumindest teilweise entlang der Längsachse der Aufsetzkalotte von der Aufsetzfläche in Richtung Topfkern erstreckt. Dadurch kann ebenfalls eine erhöhte Verschleißfestigkeit gegeben sein.

Die zumindest teilweise ausgebildete Abschirmung zwischen der ersten und zweiten Spulenvorrichtung in der Messsonde kann durch eine ferritische Hülse gebildet werden, welche an einem zur Aufsetzfläche ausgerichteten verjüngten Abschnitt der Aufsetzkalotte angeordnet ist. Am Außenumfang der Aufsetzkalotte ist somit die ferritische Hülse vorgesehen, wobei bevorzugt die Außenumfangsfläche der ferritischen Hülse bündig in einen Außenumfang der Aufsetzkalotte beziehungsweise des Topfkerns übergeht. Diese ferritische Hülse kann eine Abschirmung in radialer Richtung zur zweiten Spulenvorrichtung gegenüber dem aus weichmagnetischem Material bestehenden Abschnitt der Aufsetzkalotte ermöglichen. Dadurch wird auch ermöglicht, dass sich zwischen der ferritischen Hülse und einem insbesondere in der Längsachse der Aufsetzkalotte eingesetzten Hartmetallkern oder einer darin vorgesehenen Hartmetallbeschichtung als Polkappe dazwischen liegend sich der weich-magnetische Werkstoff der Aufsetzkalotte bis zur Aufsetzfläche erstreckt, um Kraftflusslinien des Magnetfeldes beim magnetinduktiven Messverfahren mittels der ersten Spulenvorrichtung unmittelbar an die Messoberfläche einzuleiten.

Die Stirnseite der ferritischen Hülse liegt bevorzugt in der Aufsetzfläche und ist mit dieser verrundet. Dadurch kann auch die zweite Spulenvorrichtung nahe zur Aufsetzfläche positioniert werden.

Die ferromagnetische Hülse erstreckt sich bevorzugt derart von der Aufsetzfläche der Aufsetzkalotte in Richtung zum Topfkern, dass die Länge der Hülse größer als eine Dicke der zweiten Spulenvorrichtung ausgebildet ist. Dies unterstützt die Abschirmung und Beeinflussung bei der magnetinduktiven Messung mit Niederfrequenz.

Des Weiteren ist zwischen der ersten und zweiten Spulenvorrichtung im Topfkern bevorzugt ein weiteres Abschirmelement aus ferritischem Material vorgesehen, welches in axialer Richtung eine Abschirmung bildet. Durch diese Trennung kann wiederum derselbe vorbeschriebene Effekt erzielt werden. Darüber hinaus wird bei der Hochfrequenzmessung das Wirbelstromfeld zur Messoberfläche hin konzentriert, wodurch sich der Wirbelstromeffekt erhöht.

Das Abschirmelement ist bevorzugt als Lochscheibe oder Lochfolie ausgebildet, welche sich zwischen dem Mittelzapfen und einer Innenumfangswand des Topfkerns erstreckt. Dadurch kann das Abschirmelement als einfaches Einlegeteil ausgebildet sein.

Zur vollständigen Abschirmung zwischen der ersten und zweiten Spulenvorrichtung als auch zum Grundkörper der Aufsetzkalotte, der aus einem weichmagnetischen Werkstoff besteht, ist ein Überlappungsbereich zwischen der ferritischen Hülse und dem Abschirmelement gebildet. Dadurch können zwei separate Abschirmelemente eine gemeinsame vollständige Abschirmung bilden.

Die zumindest eine archimedische Spule der zweiten Spulenvorrichtung ist bevorzugt zur Stirnseite des Gehäuses nach außen weisend positioniert. Dadurch kann diese Spule noch näher an die Messoberfläche herangeführt werden.

Nach einer weiteren bevorzugten Ausgestaltung der zweiten Spulenvorrichtung ist an dem Träger eine zweite archimedische Spule angeordnet, welche die erste archimedische Spule umgibt. Diese zweite archimedische Spule ist zur Krümmungskompensation vorgesehen, wobei die erste, vorzugsweise innere archimedische Spule zur Schichtdickenmessung verwendet wird.

Die erste und zweite archimedische Spule der zweiten Spulenvorrichtung liegen gemäß einer ersten Ausführungsform auf derselben Seite des Trägers. Alternativ können diese auch jeweils auf einer gegenüberliegenden Seite des Trägers angeordnet werden, wobei bevorzugt die innere Spule zur Stirnseite des Gehäuses weist und die äußere archimedische Spule, welche außerhalb der inneren Spule angeordnet ist, zur zweiten Spulenvorrichtung weisend an dem Träger vorgesehen ist.

Eine alternative Ausführungsform sieht vor, dass die erste und zweite Spule jeweils auf einer Seite des Trägers angeordnet und diese zumindest teilweise überlappend zueinander angeordnet sind. Dadurch kann der Durchmesser der zweiten Spulenvorrichtung noch weiter verringert werden, wobei ebenso eine Durchführung der Schichtdickenmessung nach dem Wirbelstrommessverfahren mit einer Krümmungskompensation ermöglicht ist.

Des Weiteren besteht der Träger aus einem Halbleitermaterial und umfasst eine implementierte oder aufgedruckte Schaltung für die erste Spulenvorrichtung. Als Halbleitermaterial kann beispielsweise Silicium oder Germanium eingesetzt werden. Diese Anordnung ermöglicht eine kompakte und kleinbauende Messsonde. Ein solcher scheibenförmiger Träger kann beispielsweise einen Außendurchmessers eines Topfkerns aufweisen oder auch einen kleineren Außendurchmesser, so dass eine unmittelbare Anbringung und Einbindung an oder in den Topfkern oder ein stirnseitiger Abschluss des Topfkerns durch den scheibenförmigen Träger ermöglicht ist. Darüber hinaus weist die Integration der Schaltung in den Träger den Vorteil auf, dass eine einfache schaltungstechnische Anordnung und Leitungsverbindung zur weiteren Spulenvorrichtung gegeben ist.

Des Weiteren kann der Träger alternativ mit einer darin implementierten oder aufgedruckten Schaltung an einer Außenseite des Topfkerns oder in dem Topfkern oder an einer Außenseite des Gehäuses weisenden Stirnseite des Topfkerns angeordnet sein. In Abhängigkeit des Aufbaus kann eine entsprechende Auswahl getroffen werden, um die Kompaktheit einer solchen Messsonde weiter zu steigern. Des Weiteren kann der Träger mit der implementierten Schaltung zwischen der ersten und zweiten archimedischen Spule der zweiten Spulenvorrichtung angeordnet sein.

Des Weiteren greift das Halteelement zur Aufnahme des Sensorelementes bevorzugt an einer Stirnseite oder einem zur Stirnseite weisenden Abschnitt des Topfkerns und gegenüber liegend an einem stirnseitigen Ende des Gehäuses an und nimmt das Sensorelement zumindest geringfügig federnd gelagert auf. Durch diese stirnseitige Aufnahme des Sensorelementes am äußeren Randbereich des Topfkerns kann die zweite Spulenvorrichtung noch näher an die Messoberfläche herangeführt werden. Zudem ist eine Beeinträchtigung durch eine Überdeckung des Halteelementes nicht gegeben.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittdarstellung einer ersten Ausführungsform der erfindungsgemäßen Messsonde,
Figur 2 eine schematisch vergrößerte Schnittansicht des Sensorelementes der Messsonde gemäß Figur 1,
Figur 3 eine schematische Ansicht auf die Ausführungsform gemäß Figur 2 und
Figur 4 eine schematische Schnittansicht einer alternativen Ausführungsform zu Figur 2.

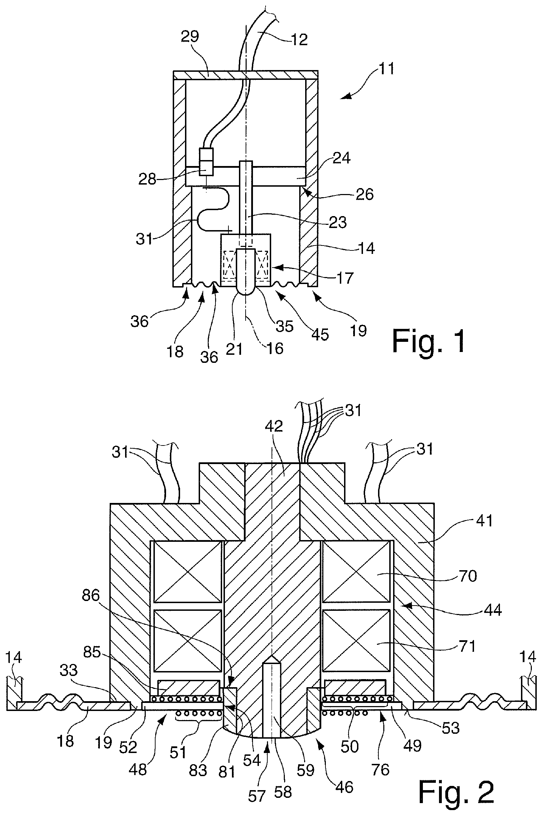

In Figur 1 ist schematisch eine Schnittansicht einer Messsonde 11 für eine nicht näher gezeigte Vorrichtung zur Messung der Dicke dünner Schichten dargestellt. Diese Messsonde 11 wird zur zerstörungsfreien Schichtdickenmessung eingesetzt. Diese Messsonde 11 kann gemäß dem Ausführungsbeispiel getrennt zur Datenverarbeitungseinrichtung der Vorrichtung zur Messung der Dicke dünner Schichten vorgesehen sein und die erfassten Messwerte über eine Verbindungsleitung 12 oder drahtlos übermitteln. Alternativ kann diese Messsonde 11 Teil der Vorrichtung zur Messung der Dicke dünner Schichten in Form eines stationären Gerätes oder eines Handgerätes sein.

Die Messsonde 11 weist ein Gehäuse 14 auf, welches insbesondere zylindrisch ausgebildet ist. In einer Längsachse 16 des Gehäuses 14 ist bevorzugt zumindest ein Sensorelement 17 angeordnet. Dieses Sensorelement 17 wird von einem Halteelement 18 getragen, welches an einem Endabschnitt 19 des Gehäuses 14 aufgenommen ist. An dem zumindest einen Sensorelement 17 ist in der Längsachse 16 des Gehäuses 14 eine Aufsetzkalotte 21 vorgesehen, welche beim Aufsetzen der Messsonde 11 auf einer Messoberfläche eines nicht näher dargestellten Messgegen-standes positionierbar ist, um eine Schichtdicke auf einem Grund- oder Trägermaterial zu ermitteln.

Das zumindest eine Sensorelement 17 weist beispielsweise ein koaxial zur Längsachse 16 angeordnetes Führungselement 23 auf, welches in einem gehäusefesten Lager 24 verschiebbar aufgenommen ist. Dadurch wird die Präzision für eine verkippungsfreie Aufsetzbewegung der Messsonde 11 auf der Messoberfläche des Messgegenstandes erhöht. Das Lager 24 kann als Luftlager oder reibungsarmes Gleitlager ausgebildet sein. Dieses gehäusefeste Lager 24 ist bevorzugt auf einer Schulter 26 des Gehäuses 14 angeordnet, wodurch wiederum eine einfache und schnelle Positionierung des Lagers 24 in radialer und axialer Richtung ermöglicht ist. Das Lager 24 umfasst des Weiteren einen Anschluss 28, der zum Anschluss der Verbindungsleitung 12 vorgesehen ist. In Abhängigkeit des Einsatzzweckes kann das Gehäuse 14 entsprechend komplettiert werden. Zur Ausgestaltung einer eigenständigen Sonde gemäß dem Ausführungsbeispiel wird das Gehäuse 14 beispielsweise nach dem Anschließen der Verbindungsleitung 12 mit einem Deckel 29 oder Verschluss geschlossen, so dass eine handgeführte Messsonde über eine Verbindungsleitung 12 mit einem stationären Gerät verbunden ist. Beim Einsetzen in eine Handmesssonde oder in ein stationäres Gerät kann der Deckel 29 entfallen.

Zwischen dem Sensorelement 17 und beispielsweise dem Anschluss 28 am Lager 24 ist eine flexible Leitung 31 mit mehreren Einzeldrähten oder ein flexibles Leitungsband vorgesehen, welches einer Biegebeanspruchung standhält. Eine solche Biegebeanspruchung wird durch die Hubbewegung des zumindest einen Sensorelementes 17 während dem Aufsetzen der Sonde auf der Oberfläche eines Messgegenstandes bewirkt. Dabei taucht das Sensorelement 17 zumindest geringfügig in das Gehäuse 14 ein.

Das scheibenförmig ausgebildete Halteelement 18 ist bevorzugt an einer gehäuseendseitigen Vertiefung 33 am Endabschnitt 19 befestigt. Dadurch wird wiederum in einfacher Weise eine radiale und axiale Ausrichtung sichergestellt. In einer ersten Ausführungsform ist das Halteelement 18 mediendicht in der Vertiefung 33 befestigt. Gleichzeitig ist das Sensorelement 17 mit seinem Gehäuse 14 mediendicht in einer Bohrung 35 des Halteelementes 18 vorgesehen. Somit ist das Gehäuse 14 nach außen hermetisch dicht abgeschlossen, so dass eine Beeinträchtigung der Aufsetzbewegung und somit des Eintauchens des zumindest einen Sensorelementes 17 in das Gehäuse 14 durch Verschmutzungen nicht gegeben ist.

Die Anordnung und Lagerung des zumindest einen Sensorelements 17 in der Messsonde 11 ist nur beispielhaft. Es können auch andere Ausführungsformen einer Messsonde 11 zur längsverschieblichen Lagerung des zumindest einen Sensorelements 17 im Gehäuse 14 vorgesehen sein.

Eine erste Ausführungsform des Sensorelementes 17 für die Messsonde 11 gemäß Figur 1 ist schematisch vergrößert in Figur 2 dargestellt. Das Sensorelement 17 umfasst einen als Gehäuse ausgebildeten Topfkern 41 mit einem Mittelzapfen 42, wodurch ein ringförmiger Aufnahmeraum gebildet ist. In diesem Aufnahmeraum ist eine erste Spulenvorrichtung 44 angeordnet. Diese erste Spulenvorrichtung 44 umfasst eine erste und zweite Spule 70, 71, welche als mehrlagige gewickelte Spulen ausgebildet und zur Durchführung der Messung der Dicke nach dem magnetinduktiven Verfahren ausgelegt sind. Das magnetinduktive Messverfahren eignet sich zur Messung von Nicht-Eisenmetallschichten, wie beispielsweise Chrom, Kupfer, Zink oder dergleichen auf magnetisierbaren Grundwerkstoffen, wie beispielsweise Stahl oder Eisen, als auch für Farb-, Lack- und Kunststoffschichten auf magnetisierbaren Grundwerkstoffen, wie beispielsweise Stahl und Eisen. Der Messbereich liegt beispielsweise bei einer Schichtdicke bis zu 1.800 µm, bevorzugt wird eine Frequenz von weniger als 300 Hz verwendet. Der Topfkern 41 sowie der Mittelzapfen 42 sind aus einem weichmagnetischen Material, insbesondere aus Weicheisen, hergestellt.

In einem stirnseitigen Endabschnitt 46 des Topfkerns 41, der gemäß Figur 2 Teil der Aufsetzkalotte 21 ist und zur äußeren Stirnseite des Gehäuses 14 weist, ist eine zweite Spulenvorrichtung 48 angeordnet. Diese zweite Spulenvorrichtung 48 umfasst einen scheibenförmigen Träger 49, auf welchem vorzugsweise einlagig eine Spule 51 archimedisch vorgesehen ist. Die Spule 51 ist zur äußeren Stirnseite des Gehäuses 14 weisend angeordnet und grenzt an die Aufsetzkalotte 21 an. Gegenüberliegend ist gemäß dem Ausführungsbeispiel eine zweite Spule 50 ebenfalls am Träger 49 angeordnet, da diese sich wiederum an die Aufsetzkalotte 21 angrenzend radial nach außen erstreckt. Der Träger 49 weist eine Zentralöffnung 54 auf, durch welche sich die Aufsetzkalotte 21 erstreckt, die entweder an dem Mittelzapfen 42 befestigt ist oder eine Verlängerung des Mittelzapfens 42 darstellt. Der Träger 49 ist bevorzugt an einer inneren umlaufenden Schulter 52 des Topfkerns 41 beziehungsweise an einer durch die Stirnfläche 53 des Topfkerns 41 gebildeten Ebene angeordnet.

Die archimedische Spule 50, 51 kann aus einer metallisch leitenden Schicht auf dem Träger 49, insbesondere einer Kupferschicht, hergestellt sein. Diese kann beispielsweise eine Dicke von weniger als 0,1 mm betragen. Insbesondere liegt die Dicke in einem Bereich von circa 0,01 mm. Im Anschluss daran wird mittels Laserabtrag die archimedische Spule hergestellt, wobei bevorzugt eine Leitungsbreite von beispielsweise 0,019 mm bei einer Dicke von 0,01 mm und zwischen den einzelnen Windungen ein Abstand in einem Bereich von 0,1 mm bis 0,05 mm, insbesondere von 0,01 mm, verbleibt. Auf diese Spule 50, 51 kann eine nicht näher dargestellte Isolierschicht oder Schutzschicht aufgebracht werden, beispielsweise in Form eines Lackes oder dergleichen.

Alternativ kann die Spule 50, 51 auf dem Träger 49 auch durch ein Ätzverfahren eingesetzt werden. Ebenso ist ein Aufdampfverfahren von metallischen Schichten auf den Träger 49 zur Bildung der Spule 50, 51 möglich. Eine weitere Möglichkeit stellt die Aufwicklung der Spulen dar.

Die zweite Spulenvorrichtung 48 ermöglicht die Durchführung einer Messung nach dem Wirbelstromverfahren, das heißt, dass die Messung der Dicke von elektrisch nicht leitenden Schichten auf Nicht-Eisenmetallen, zum Beispiel von Farben, Lacken, Kunststoffen aus Aluminium, Kupfer, Messing, Edelstahl oder anderen anodisierten Schichten, oder auf Aluminium in einem Hochfrequenzwechselfeld ermöglicht ist. Hierbei wird ein Wechselfeld mit einer Frequenz von mindestens 1 MHz angelegt.

Die Aufsetzkalotte 21 ist gemäß Figur 2 als Teil des Mittelzapfens 42 ausgebildet und weist zur Oberfläche eines Messgegenstandes eine verrundete Auflagefläche 57 auf. Innerhalb der verrundeten Auflagefläche 57 ist eine Polkappe 58 ausgebildet, welche als Auflagefläche auf einem beschichteten Gegenstand zur Messung der Dicke dünner Schichten aufliegt. Die Polkappe 58 besteht beispielsweise aus einer Hartmetallbeschichtung oder wie im Ausführungsbeispiel dargestellt, aus einem Hartmetalleinsatz oder einem Hartmetallstift, beispielsweise aus TiC, TiN oder Ti(c,n).

Alternativ kann auch eine Hartmetallvollkugel oder Hartmetallhalbkugel vorgesehen sein, die in die Aufsetzkalotte 21 eingesetzt, eingepresst oder eingeklebt wird und die Polkappe 58 bildet.

Die Aufsetzkalotte 21 weist am äußeren Randbereich der verrundeten Auflagefläche 57 einen verjüngten Bereich 81 auf, der als gestufte Stirnfläche ausgebildet ist. Dieser verjüngte Bereich 81 ist im Durchmesser kleiner als der Außenumfang des Mittelzapfens 42 ausgebildet. In diesem verjüngten Bereich 81 ist eine Hülse 83 aus ferritischem Material angeordnet oder vorgesehen, welche zur Abschirmung der zweiten Spulenvorrichtung 48 zur Aufsetzkalotte 21 in radialer Richtung dient.

Diese Hülse 83 aus ferritischem Material ist bündig mit der verrundeten Auflagefläche 57 der Aufsetzkalotte 21 ausgebildet. Alternativ kann die zur Messoberfläche weisende Stirnseite der Hülse 83 gegenüber der verrundeten Auflagefläche 57 der Aufsetzkalotte 21 zurück springen. Die Hülse 83 des ferritischen Materials erstreckt sich in Längsrichtung parallel zur Längsachse 16 zumindest soweit in Richtung auf die erste Spulenvorrichtung 44, so dass diese die zweite Spulenvorrichtung 48 in radialer Richtung gesehen zumindest überdeckend angeordnet ist. Bevorzugt erstreckt sich die Länge der Hülse 83 über die zweite Spulenvorrichtung 48 hinaus in Richtung der ersten Spulenvorrichtung 44. Diese Hülse 83 stellt ein erstes Element einer Abschirmung zwischen der ersten und zweiten Spulenvorrichtung 44, 48 dar.

In einem Zwischenraum zwischen dem Mittelzapfen 42 und dem Topfkern 41 ist ein Abschirmelement 85 vorgesehen, welches des Weiteren die erste und zweite Spulenvorrichtung 44, 48 gegeneinander abschirmt. Dieses Abschirmelement 85 ist ebenfalls aus ferritischem Material ausgebildet und weist bevorzugt eine scheibenförmige Kontur auf. Bei diesem Abschirmelement 85 kann es sich beispielsweise auch um eine ferritische Folie handeln. Diese deckt vorzugsweise die innenliegende Spule 50 ab. Zur Längsachse weisend ist bevorzugt vorgesehen, dass das Abschirmelement 85 und die Hülse 83 einen Überlappungsbereich 86 aufweisen, so dass diese vorzugsweise aneinander angrenzen.

Bei der zweiten Spulenvorrichtung 48 ist die Spule 50 im Durchmesser größer als die Spule 51 auf der Vorderseite. Dadurch dient die Spule 51 zur Messung der Schichtdicke. Die Spule 50 wird zur Messung einer Krümmung der Messoberfläche eingesetzt, welche von der Ebene abweicht. Somit ist der Krümmungseinfluss kompensierbar. Durch die Abschirmung mittels der Hülse 83 und dem Abschirmelement 85 wird das Feld der Spule 71 abgeschirmt. Das Abschirmelement 85 hat eine sehr geringe Permeabilität, so dass das niederfrequente Feld nahezu unbeeinflusst bleibt und der niederfrequente Messeffekt der ersten Spulenvorrichtung 44 nicht geschwächt wird.

Für die Wirbelstrommessung weist das Abschirmelement 85 den Vorteil auf, dass die Wicklungen der Spule 71 den Messeffekt nicht verringern. Vielmehr wird das rückseitige Feld der Spule 50 zum Messeffekt nicht verringert. Somit wird das Feld konzentriert und verstärkt den Wirbelstromeffekt. Durch die Hülse 83 aus ferritischem Material an der Aufsetzkalotte 21 wird das Wirbelstromfeld bei der Wirbelstrommessung mittels der zweiten Spulenvorrichtung 48 von der Aufsetzkalotte 21 beziehungsweise dem leicht magnetischen Abschnitt, der zur verrundeten Auflagefläche 57 führt, abgeschirmt, um den Messeffekt bei der Wirbelstrommessung mittels Hochfrequenz nicht zu beeinflussen.

Bei der in Figur 2 dargestellten Ausführungsform ist bevorzugt vorgesehen, dass der Träger 49 selbst eine Schaltung 76 aufnimmt. Alternativ kann die Schaltung auch zwischen der Spule 50 der zweiten Spulenvorrichtung 44 und dem Abschirmelement 85 oder zwischen dem Abschirmelement 85 und der Spule 71 als auch zwischen dem Topfkern 41 und der Spule 70 vorgesehen sein. Ebenso kann die Schaltung auch außerhalb des Topfkerns 41 daran befestigt werden.

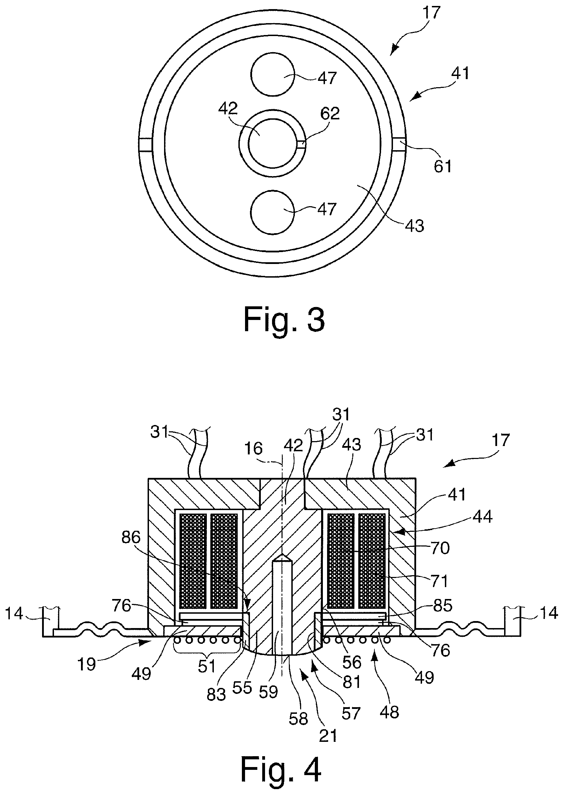

In Figur 3 ist eine schematische Draufsicht auf den Topfkern 41 gemäß Figur 2 dargestellt. Am Außenumfang des Topfkerns 41 ist eine Nut 61 vorgesehen, durch welche Anschlussleitungen in das Gehäuseinnere der Messsonde 11 geführt werden. Des Weiteren kann im Mittelzapfen 42 des Topfkerns 41 eine Nut 62 angeordnet sein, welche ebenfalls einen Freiraum zur Führung von Anschlussleitungen für die erste und zweite Spulenvorrichtung 44, 48 ermöglicht. Über eine Öffnung 47 im Boden 43 des Topfkerns 41 können die Leitungen auch aus dem Topfkern 41 herausgeführt werden.

In Figur 4 ist eine alternative Ausführungsform zu Figur 2 dargestellt.

Diese Ausführungsform weicht dahingehend ab, dass die zweite Spulenvorrichtung 48 nur eine archimedische Spule 51 zur Schichtdickenmessung umfasst. Auf der gegenüberliegenden Seite des Trägers 49 sind beispielsweise die Schaltung 76 und das Abschirmelement 85 angeordnet. Im Übrigen kann auf die vorstehenden Ausführungsformen Bezug genommen werden.

Durch dieses Sensorelement 17 wird eine duale Messsonde geschaffen, welche eine erste Spulenvorrichtung 44 zur Durchführung eines magnetinduktiven Messverfahrens und eine zweite Spulenvorrichtung 48 zur Durchführung einer Schichtdickenmessung nach dem Wirbelstromverfahren ermöglicht, die eine kleinbauende Anordnung aufweist, wobei durch die Positionierung der zweiten Spulenvorrichtung 48 an der Aufsetzkalotte 21 und die Ausbildung der zumindest einen archimedischen Spule 51 das gesamte Sensorelement 17 unmittelbar an die Messoberfläche des Messgegenstandes herangeführt werden kann. Durch die Abmessungen des Sensorelementes 17 kann eine hohe Konzentration der Messfelder - also sowohl des magnetinduktiven Feldes als auch des Wirbelstromfeldes - erzielt werden. Dadurch geht eine hohe Messempfindlichkeit einher, das heißt, die Auflösung von Messwerten liegt in einstelligen Nanometerbereich, also im Bereich von 0,001 µm.

## Patentansprüche

1. Messsonde zur Messung der Dicke dünner Schichten mit einem Gehäuse (14), mit zumindest einem Sensorelement (17), welches entlang einer Längsachse (16) zumindest geringfügig bewegbar aufgenommen ist und welches zumindest eine erste Spulenvorrichtung (44) umfasst, die einen in der Längsachse (16) des Gehäuses (14) angeordneten magnetischen Topfkern (41) aufweist, und dessen Mittelzapfen (42) eine erste und zweite Spule (70, 71) zugeordnet ist und mit einer an dem Mittelzapfen (42) zur Messoberfläche eines Messgegenstandes weisenden Aufsetzkalotte (21), welche zum Aufsetzen auf einer Messoberfläche eine Auflagefläche (57) umfasst, **dadurch gekennzeichnet, dass** der Aufsetzkalotte (21) zugeordnet eine zweite Spulenvorrichtung (48) vorgesehen ist, welche aus einem Scheiben- oder ringförmigen Träger (49) mit zumindest einer archimedischen Spule (51) ausgebildet ist, dass zwischen der ersten und zweiten Spulenvorrichtung (44, 48) zumindest teilweise eine Abschirmung (85) vorgesehen ist und dass die Aufsetzkalotte (21) zur Auflagefläche (57) ausgerichtet einen im Umfang verjüngten Bereich (81) aufweist, an dem eine Hülse (83) aus einem ferritischen Material vorgesehen ist, welche in radialer Richtung zur zweiten Spulenvorrichtung (48) eine Abschirmung bildet.

2. Messsonde nach Anspruch 1, **dadurch gekennzeichnet, dass** die Aufsetzkalotte (21) aus einem weichmagnetischen Material hergestellt ist, welche vorzugsweise ein Teil des Mittelzapfens (42) des Topfkerns (41) oder daran befestigbar ist.

3. Messsonde nach Anspruch 1, **dadurch gekennzeichnet, dass** die Aufsetzkalotte (21) in der verrundeten Auflagefläche (57) eine Polkappe (58) aufweist, die durch eine Hartmetallbeschichtung ausgebildet ist.

4. Messsonde nach Anspruch 1, **dadurch gekennzeichnet, dass** die Aufsetzkalotte (21) in der verrundeten Auflagefläche (57) eine Polkappe (58) aufweist, die durch einen Hartmetallkern oder Hartmetallstift (59) ausgebildet ist, der sich zumindest teilweise entlang der Längsachse (16) der Aufsetzkalotte (21) von der Aufsetzfläche (57) in Richtung auf den Topfkern (41) erstreckt.

5. Messsonde nach Anspruch 4, **dadurch gekennzeichnet, dass** die freie Stirnseite der Hülse (83) mit der Aufsetzfläche (57) der Aufsetzkalotte (21) verrundet ist.

6. Messsonde nach Anspruch 4, **dadurch gekennzeichnet, dass** die Hülse (83) sich von der Aufsetzfläche (57) in Richtung zum Topfkern (41) erstreckt, wobei die Länge der Hülse (83) größer als eine Dicke der zweiten Spulenvorrichtung (48) ist.

7. Messsonde nach Anspruch 4, **dadurch gekennzeichnet, dass** die zweite Spulenvorrichtung (48) im Bereich der Hülse (83) zur Aufsetzkalotte (21), insbesondere nahe der verrundeten Auflagefläche (57), positioniert ist.

8. Messsonde nach Anspruch 1, **dadurch gekennzeichnet, dass** zwischen der ersten und zweiten Spulenvorrichtung (44, 48) im Topfkern (41) ein Abschirmelement (85) aus ferritischem Material vorgesehen ist, welches in axialer Richtung zur zweiten Spulenvorrichtung (48) eine Abschirmung bildet.

9. Messsonde nach Anspruch 8, **dadurch gekennzeichnet, dass** das Abschirmelement (85) als ring- oder scheibenförmiger Körper ausgebildet ist, welcher sich vom Mittelzapfen (42) bis zum zylindrischen Innenwandabschnitt des Topfkerns (41) erstreckt und vorzugsweise zwischen dem Abschirmelement (85) und der Hülse (83) ein Überlappungsbereich (86) gebildet ist.

10. Messsonde nach Anspruch 1, **dadurch gekennzeichnet, dass** auf dem Träger (49) zumindest eine zweite archimedische Spule (50) vorgesehen ist, weiche die erste archimedische Spule (51) umgibt und vorzugsweise auf derselben oder einer gegenüberliegenden Seite des Trägers (49) angeordnet ist.

11. Messsonde nach Anspruch 1, **dadurch gekennzeichnet, dass** auf dem Träger (49) zumindest eine zweite archimedische Spule (50) vorgesehen ist, die auf dem Träger (49) der ersten archimedischen Spule (51) gegenüberliegend und diese zumindest teilweise überlappend angeordnet ist.

12. Messsonde nach Anspruch 1, **dadurch gekennzeichnet, dass** der Träger (49) aus einem Halbleitermaterial besteht und eine implementierte oder aufgedruckte Schaltung für die erste und/oder zweite Spulenvorrichtung (44, 48) umfasst.

13. Messsonde nach Anspruch 12, **dadurch gekennzeichnet, dass** der Träger (49) mit einer darin implementierten oder aufgedruckten Schaltung an einer Außenseite des Topfkerns (41) oder in dem Topfkern (41) oder an einer zur Außenseite des Gehäuses (14) weisenden Stirnseite des Topfkerns (41) angeordnet ist oder dass der Träger (49) mit der implementierten Schaltung zwischen der ersten und zweiten Spule (50, 51) der zweiten Spulenvorrichtung (48) angeordnet ist.

14. Messsonde nach Anspruch 1, **dadurch gekennzeichnet, dass** ein Halteelement (18) an einer Stirnseite oder an einem zur Stirnseite weisenden Abschnitt des Topfkerns (41) angeordnet ist und das Sensorelement (17) zum Gehäuse (14) aufnimmt.

## Claims

1. Measuring probe for measuring the thickness of thin layers with a housing (14), having at least one sensor element (17), which is received at least slightly moveably along a longitudinal axis (16) and which comprises at least one first winding device (44), which has a magnetic pot core (41) arranged in the longitudinal axis (16) of the housing (14), and to whose central pin (42) a first and second coil (70, 71) are allocated, and having a spherical positioning cap (21) on the central pin (42) pointing towards the measuring surface of an object to be measured, which cap comprises a bearing surface (57) for fitting on a measuring surface, **characterised in that** a second winding device (48) is provided allocated to the spherical positioning cap (21), which device is formed from a discoidal or annular carrier (49) having at least one Archimedean coil (51), **in that** a shield (85) is provided at least partially between the first and second wining device (44, 48), and **in that** the spherical positioning cap (21) has, in alignment with the bearing surface (57), a region (81) that is tapered in the periphery, on which a sleeve (83) made from a ferritic material is provided, which forms a shield in the radial direction towards the second winding device (48).

2. Measuring probe according to claim 1, **characterised in that** the spherical positioning cap (21) is produced from a magnetically soft material, which is preferably a part of the central pin (42) of the pot core (41) or is fastened thereto.

3. Measuring probe according to claim 1, **characterised in that** the spherical positioning cap (21) has a pol cap (58) in the rounded bearing surface (57), which is formed by a hard metal coating.

4. Measuring probe according to claim 1, **characterised in that** the spherical positioning cap (21) has a pol cap (58) in the rounded bearing surface (57), which is formed by a hard metal core or hard metal pin (59), which extends at least partially along the longitudinal axis (16) of the spherical positioning cap (21) from the bearing surface (57) in the direction of the pot core (41) .

5. Measuring probe according to claim 4, **characterised in that** the free front face of the sleeve (83) with the bearing surface (57) of the spherical positioning cap (21) is rounded.

6. Measuring probe according to claim 4, **characterised in that** the sleeve (83) extends from the bearing surface (57) in the direction towards the pot core (41), wherein the length of the sleeve (83) is greater than a thickness of the second winding device (48).

7. Measuring probe according to claim 4, **characterised in that** the second winding device (48) is positioned in the region of the sleeve (83) with respect to the spherical positioning cap (21), in particular close to the rounded bearing surface (57).

8. Measuring probe according to claim 1, **characterised in that** a shielding element (85) made from ferritic material is provided between the first and second winding device (44, 48) in the pot core (41), which forms a shield in the axial direction towards the second winding device (48) .

9. Measuring probe according to claim 8, **characterised in that** the shielding element (85) is formed as an annular or discoidal body, which extends from the central pin (42) to the cylindrical inner wall section of the pot core (41) and preferably an overlap region (86) is formed between the shielding element (85) and the sleeve (83).

10. Measuring probe according to claim 1, **characterised in that** at least one second Archimedean coil (50) is provided on the carrier (49), which encloses the first Archimedean coil (51) and is preferably arranged on the same or an opposite side of the carrier (49).

11. Measuring probe according to claim 1, **characterised in that** at least one second Archimedean coil (50) is provided on the carrier (49), which is arranged on the carrier (49) opposite the first Archimedean coil (51) and at least partially overlaps it.

12. Measuring probe according to claim 1, **characterised in that** the carrier (49) consists of a semi-conductive material and comprises an implemented or inscribed circuit for the first and/or second winding device (44, 48).

13. Measuring probe according to claim 12, **characterised in that** the carrier (49) having a circuit implemented therein or inscribed thereon is arranged on an outer side of the pot core (41) or in the pot core (41) or on a front face of the pot core (41) pointing towards the outer side of the housing (14), or **in that** the carrier (49) having the implemented circuit is arranged between the first and second coil (50, 51) of the second winding device (48).

14. Measuring probe according to claim 1, **characterised in that** a holding element (18) is arranged on a front face or on a section of the pot core (41) pointing towards the first face and receives the sensor element (17) with respect to the housing (14).

## Revendications

1. Sonde de mesure destinée à mesurer l'épaisseur de couches minces, pourvue d'un boîtier (14), d'au moins un élément capteur (17) qui est logé de manière à se déplacer au moins de manière minime le long d'un axe longitudinal (16) et qui comprend au moins un premier dispositif de bobines (44) qui présente un noyau en pot (41) magnétique disposé dans l'axe longitudinal (16) du boîtier (14) et au tenon central (42) duquel sont affectées une première et une deuxième bobine (70, 71), et pourvue d'une calotte de positionnement (21), disposée sur le tenon central (42) et dirigée vers la surface de mesure d'un objet de mesure, laquelle comprend une surface d'appui (57) en vue d'être positionnée sur une surface de mesure, **caractérisée en ce qu'**il est prévu un deuxième dispositif de bobines (46) affecté à la calotte de positionnement (21), lequel est constitué d'un support (49) en forme de disque ou d'anneau pourvu d'au moins une bobine d'Archimède (51), **en ce qu'**un écran (85) est prévu au moins en partie entre le premier et le deuxième dispositif de bobines (44, 48) et **en ce que** la calotte de positionnement (21) présente une zone (81) de circonférence réduite tournée vers la surface d'appui (57) et sur laquelle est prévue une douille (83) réalisée en un matériau ferritique laquelle forme, en direction radiale, un écran par rapport au deuxième dispositif de bobines (48).

2. Sonde de mesure selon la revendication 1, **caractérisée en ce que** la calotte de positionnement (21) est fabriquée en un matériau magnétique doux et est de préférence une partie du tenon central (42) du noyau en pot (41) ou peut être fixée sur celui-ci.

3. Sonde de mesure selon la revendication 1, **caractérisée en ce que** la calotte de positionnement (21) présente, dans la surface d'appui (57) arrondie, un couvre-pôle (58) qui est formé par un revêtement en métal dur.

4. Sonde de mesure selon la revendication 1, **caractérisée en ce que** la calotte de positionnement (21) présente, dans la surface d'appui (57) arrondie, un couvre-pôle (58) qui est formé par un noyau en métal dur ou une tige en métal dur (59) qui s'étend au moins en partie le long de l'axe longitudinal (16) de la calotte de positionnement (21), depuis la surface de positionnement (57) en direction du noyau en pot (41).

5. Sonde de mesure selon la revendication 4, **caractérisée en ce que** la face frontale libre de la douille (83) est arrondie conformément à la surface de positionnement (57) de la calotte de positionnement (21).

6. Sonde de mesure selon la revendication 4, **caractérisée en ce que** la douille (83) s'étend depuis la surface de positionnement (57) en direction du noyau en pot (41), la longueur de la douille (83) étant supérieure à une épaisseur du deuxième dispositif de bobines (48).

7. Sonde de mesure selon la revendication 4, **caractérisée en ce que** le deuxième dispositif de bobines (48) est positionné dans la zone de la douille (83), vers la calotte de positionnement (21), en particulier à proximité de la surface d'appui (57) arrondie.

8. Sonde de mesure selon la revendication 1, **caractérisée en ce qu'**entre le premier et le deuxième dispositif de bobines (44, 48) est prévu, dans le noyau en pot (41), un élément écran (85) en matériau ferritique qui forme en direction axiale un écran par rapport au deuxième dispositif de bobines (48).

9. Sonde de mesure selon la revendication 8, **caractérisée en ce que** l'élément écran (85) est formé en tant que corps en forme d'anneau ou de disque qui s'étend depuis le tenon central (42) jusqu'à la partie de paroi intérieure cylindrique du noyau en pot (41) et **en ce qu'**une zone de chevauchement (86) est formée de préférence entre l'élément écran (85) et la douille (83).

10. Sonde de mesure selon la revendication 1, **caractérisée en ce que** sur le support (49) est prévue au moins une deuxième bobine d'Archimède (50) qui entoure la première bobine d'Archimède (51) et qui est disposée de préférence sur le même côté du support (49) ou sur un côté opposé de celui-ci.

11. Sonde de mesure selon la revendication 1, **caractérisée en ce que** sur le support (49) est prévue au moins une deuxième bobine d'Archimède (50) qui est disposée sur le support (49), à l'opposé de la première bobine d'Archimède (51) et qui chevauche celle-ci au moins en partie.

12. Sonde de mesure selon la revendication 1, **caractérisée en ce que** le support (49) est réalisé en un matériau semi-conducteur et comprend un circuit implémenté ou imprimé pour le premier et/ou le deuxième dispositif de bobines (44, 48).

13. Sonde de mesure selon la revendication 12, **caractérisée en ce que** le support (49) pourvu d'un circuit implémenté ou imprimé est disposé sur une face extérieure du noyau en pot (41) ou dans ledit noyau en pot (41) ou sur une face frontale du noyau en pot (41) tournée vers la face extérieure du boîtier (14), ou **en ce que** le support (49) pourvu du circuit implémenté est disposé entre la première et la deuxième bobine (50, 51) du deuxième dispositif de bobines (48).

14. Sonde de mesure selon la revendication 1, **caractérisée en ce que** l'élément de retenue (18) est disposé sur une face frontale ou sur une partie du noyau en pot (41) tournée vers ladite face frontale et reçoit l'élément capteur (17) en le maintenant par rapport au boîtier (14).
